Europäisches Patentamt

European Patent Office

Office européen des brevets

(11) Publication number: **0 135 628 B1**

# EUROPEAN PATENT SPECIFICATION

(45) Date of publication of patent specification: **24.01.90**

(51) Int. Cl.⁵: **B 29 C 47/88, B 29 L 7/00**

(21) Application number: **83305794.6**

(22) Date of filing: **28.09.83**

(54) Method of producing thermoplastic resin sheet or film.

(43) Date of publication of application:
**03.04.85 Bulletin 85/14**

(45) Publication of the grant of the patent:
**24.01.90 Bulletin 90/04**

(84) Designated Contracting States:
**AT BE CH DE FR GB IT LI NL SE**

(56) References cited:
**DE-A-2 457 250**
**US-A-3 090 998**
**US-A-3 377 413**
**US-A-3 862 285**
**US-A-3 961 008**

(73) Proprietor: **IDEMITSU PETROCHEMICAL CO. LTD.**
**1-1, Marunouchi 3-chome Chiyoda-ku Tokyo (JP)**

(72) Inventor: **Fujii, Atsushi**
**No. 1660, Kamiizumi Sodegaura-machi Kimitsu-gun Chiba-Ken (JP)**

(74) Representative: **SERJEANTS**
**25, The Crescent King Street**
**Leicester, LE1 6RX (GB)**

Courier Press, Leamington Spa, England.

EP 0 135 628 B1

## Description

The invention relates to a method of producing thermoplastic resin sheet or film.

Known methods of producing thermoplastic resin sheet or film by quenching the thermoplastic resin material extruded through a T-die, include the chill roll method and the water quenching method (See US—A—3862285 and DE—A—2 457 250).

The water quenching method according to DE—A—2 457 250 includes introducing thermoplastic resin sheet or film into a slit in which cooling water is flowing in the same direction as the sheet.

The chill roll method, however, has various disadvantages. For example, since at high-speed moulding air may be caught between one of the rolls and the molten resin sheet or the contact between the roll and the molten resin sheet may be poor, unevenness in thickness and wrinkles are formed; in the case of the production of thicker sheets, the difference in the degree of cooling between the obverse and reverse surfaces of the molten resin sheet may cause curling, and insufficient quenching may reduce the transparency or surface lustre of the final product.

The water quenching method also suffers from disadvantages. Insufficient or uneven cooling of the molten resin sheet, which is caused by swelling or swaying of the water surface due to a local radiation of the heat from the molten resin sheet on the surface of cooling water, may give rise to the formation of haze dots and unevenness in thickness and further to a reduction or unevenness in transparency and surface lustre. High-speed moulding cannot therefore be conducted.

An advantage of the water quenching method over the chill roll method is that the sheet or film can be cooled efficiently. For this reason, a method has been proposed to overcome the above-described problems of the water quenching method, in which the molten resin sheet is cooled by a cooling water stream flowing on both sides thereof. However, even in accordance with this improved method, properties such as transparency of sheet or film and high-speed mouldability are not sufficiently satisfactory. This tendency becomes noticeable as the thickness of the sheet or film is increased or the moulding rate is increased.

We have already developed a method of forming thermoplastic resin sheet or film, which overcomes the problems as described above (see Japanese Patent Application No. 55291/1982). Thus the present invention provides an improved method over the foregoing method.

The invention provides a method of producing a thermoplastic sheet or film, the method comprising extruding a molten thermoplastic resin sheet through a T-die in which quenching water is fed to a multistage slit in which water flows in the same direction as the sheet, the water level in the first slit of the multistage slit being maintained at as low a level as possible and substantially at right angles to the first slit, so that the water flows in a laminar state.

Various thermoplastic resins can be used in the production of sheet or film by the method of the invention. Suitable examples are olefin-based resins, such as high density polyethylene, medium density polyethylene, low density polyethylene, polypropylene, polybutene-1, poly (4-methylpentene-1) copolymers of ethylene and other α-olefins or unsaturated acids (e.g. an ethylene/propylene copolymer, an ethylene/butene-1 copolymer, an ethylene/octene-1 copolymer, an ethylene/vinyl acetate copolymer, an ethylene/acrylic acid copolymer, etc.), and copolymers of propylene and other α-olefins or unsaturated acids; polyamide resins, such as Nylon-6 and Nylon-6,6; polyester resins, such as polyethylene terephthalate and polybutylene terephthalate; polyvinyl chloride resins; polyvinylidene chloride resins; polyvinyl alcohol resins; and polystyrene resins.

Especially, the present invention is effective when, of the thermoplastic resins as described above, crystalline thermoplastic resins causing various problems, such as in respect of transparency and surface properties are used. The method of the invention is preferably applicable to the production of sheet or film from olefin-based resins, particularly propylene-based resins.

These propylene-based resins include a homopolymer of propylene and random or block copolymers of at least 80% by weight of propylene and other polymerizable monomers, having a density of from 0.895 to 0.915 g/cc and a melt index of from 0.1 to 10 g/10 minutes, preferably from 0.3 to 5 g/10 minutes.

The term "sheet or film" as used herein includes both single layer sheets or films and multi-layer sheets or films.

These crystalline thermoplastic resins may further contain nucleating agents. Suitable examples of such nucleating agents include aromatic mono- or polycarboxylic acids, such as benzoic acid, p-(t-butyl)-benzoic acid, o-methylbenzoic acid, 2,4-dimethylbenzoic acid, α-naphthoic acid, m-chlorobenzoic acid, m-nitrobenzoic acid, o-aminobenzoic acid, isophthalic acid, terephthalic acid, monomethylphthalate, phthalic acid, trimellitic acid, and pyromellitic acid, or their anhydrides, or their metal salts; aromatic sulphonic acids, such as benzenesulphonic acid, 2,5-dichlorobenzenesulphonic acid, m-xylenesulphonic acid, and α-naphthalenesulphonic acid, or their metal salts; aliphatic or aromatic oxyacids, such as malic acid, tartaric acid, citric acid, and salicylic acid, or their metal salts; saturated aliphatic or alicyclic dicarboxylic acids, such as oxalic acid, malonic acid, succinic acid, adipic acid, suberic acid, sebacic acid, or their anhydrides; cis-cyclohexane-1,4-dicarboxylic acid, or its metal salts; nucleus-substituted aliphatic monocarboxylic acids, such as monophenylacetic acid, diphenylglycolic acid, phenyldimethylacetic acid, and cyclohexylic acid, or their metal salts; dibenzylidene sorbitols, such as dibenzylidene sorbitol, dibenzylidene xylitol, dibenzylidene percitol, and dibenzylidene mannitol, and their derivatives in which the benzene nucleus is

2

substituted by, for example, an alkyl group, an alkoxy group, or a halogen atom; and inorganic powders, such as silica, talc and zeolite. The metal salts as described above are the salts of metals belonging to Groups I to III of the Periodic Table, such as lithium, sodium, potassium, magnesium, calcium, zinc, and aluminium.

The amount of the nucleating agent added is usually from 0.005 to 1% by weight, preferably from 0.05 to 0.5% by weight, based on the crystalline thermoplastic resin. If the amount of the nucleating agent added is less than 0.005% by weight, no sufficient effect can be obtained. On the other hand, even if the nucleating agent is added in excess of 1% by weight, no additional effect can be obtained, and thus it is uneconomical.

In the present invention, if necessary, additives such as surface active agents, lubricants, and antioxidants can be added to the crystalline thermoplastic resins containing the nucleating agents as described above.

In earlier methods, when a sheet-shaped thermoplastic resin in a molten state was extruded through a T-die and introduced into a slit in which cooling water is flowing, the resin was cooled unevenly and a sheet or film having satisfactory transparency and surface lustre could not be obtained unless the water level in the slit was maintained at as low a level as possible. On the other hand, the present invention utilizes an at least two-stage slit. In the method of the invention, therefore, although the water level in the first slit should be set at the lowest possible level, the tubulence of the water stream in the subsequent slits does not exert appreciable influences on the quality of sheet or film, and it is not necessary to pay any special attention to the control of the water level in the subsequent slits. This is unexpected and astonishing. The term "multi-stage slit" as used herein means from 2 to 5 stage slits and preferably 2 or 3 stage slits.

The invention is further described with reference to the accompanying drawings, of which:

Fig. 1 is a schematic diagram showing an embodiment of the method of the invention; and

Fig. 2 is a schematic diagram showing another embodiment of the method of the invention.

A thermoplastic resin sheet 2 as extruded in a molten state through a T-die 1 is introduced into the first slit 3 in which cooling water is flowing. The first slit 3 is connected to the first water bath 4 positioned below the T-die 1, and the length of the first slit 3 is usually from 5 to 100 mm and preferably from 30 to 50 mm. In the first water bath 4, the cooling water coming into contact with the thermoplastic resin sheet flows in a laminar flow state.

In order to insure the laminar flow state of the cooling water, it is effective to increase the viscosity of the cooling water.

The surface smoothness and haze dots of the film or sheet is more improved when a viscous fluid is used as the cooling water. In this case, the viscosity of the viscous fluid is from 2 to 3,000 centipoises and preferably from 3 to 1,000 centipoises. A preferred example of such viscous fluids is an aqueous solution of an organic or inorganic thickening agent. As organic thickening agents, various compounds such as natural polymeric substances, and synthetic substances (including semi-synthetic substances) can be used.

Examples of natural polymeric substances include starches such as potato starch, sweet potato starch, wheat starch, etc., mannans such as konnyaku; sea weeds such as agar, sodium alginate, etc.; viscous substances originated in plants such as traganth gum, gum arabic, etc; viscous substances originated in microorganisms such as dextrin, levan, etc.; and proteins such as glue, gelatin, casein, collagen, etc. Examples of semi-synthetic substances include celluloses such as viscose, methyl cellulose, carboxymethyl cellulose, etc; starch substances such as soluble starch, carboxymethyl starch, dialdehyde starch, etc. Examples of synthetic substances include polyvinyl alcohol, polymer of sodium acrylate, polyethylene oxide, etc.

Examples of inorganic thickening agents are silica sol, alumina sol, clay, water glass, and various metal salts.

In addition to the aqueous solutions as prepared by adding the thickening agents as described above, viscous substances such as polyethylene glycol, polypropylene glycol, and silicone oil can be used.

In the present invention, the cooling water is used to cool the thermoplastic resin sheet. The temperature of the cooling water is suitably within the range of from −10 to +50°C, with the range of from 2 to 30°C being preferred. In the production of sheet having a thickness of at least 0.2 mm, the formation of haze dots can be effectively prevented by controlling the temperature of the cooling water to 20°C or lower and preferably 10°C or lower. The cooling efficiency can be further increased by improving the wetting properties of the thermoplastic resin sheet through the addition of surface active agents to the thickening agents as described above.

The water level should be lowered as much as possible.

This permits the prevention of partial boiling and the uniformalization of cooling points. The water level is preferably 7 mm or less. If the water level is higher than 10 mm, boiling dots, haze dots and curls are formed in the sheet obtained, and the total haze becomes 25—28%.

The cooling water flows from the first water bath 4 into the first slit 3. The thermoplastic resin sheet and the cooling water run in the same direction, and the cooling water flows on both surfaces of the thermoplastic resin sheet, cooling it efficiently. It is desirable for the flow rate of the cooling water to be equal to or higher than the running speed of the thermoplastic resin sheet.

The thermoplastic resin sheet next passes through the second slit 5. It is suitable that the second slit 5 be positioned below the first slit 3 and that the distance between the first and second slits be from 10 to 200 mm. The second slit 5 is connected to the second water bath 6, and the length of the second slit 5 is suitably from 5 to 100 mm and preferably from 30 to 50 mm as in the case of the first slit 3. In the same arrangement as above, the desired number of slits and water baths, such as the third slit and third water bath and the fourth slit and fourth water batch, can be provided. In the second slit and the subsequent slits, the thermoplastic resin sheet is cooled by the flow of the cooling water thereon as in the case of the first slit 3. As shown in the drawings, fresh cooling water is added to the second slit and the subsequent slits. In the second slit and the subsequent slits, however, the water level of the cooling water is not important. This is due to the unexpected fact that the turbulence of the cooling water at these stages does not exert adverse influences on the quality of the sheet or film.

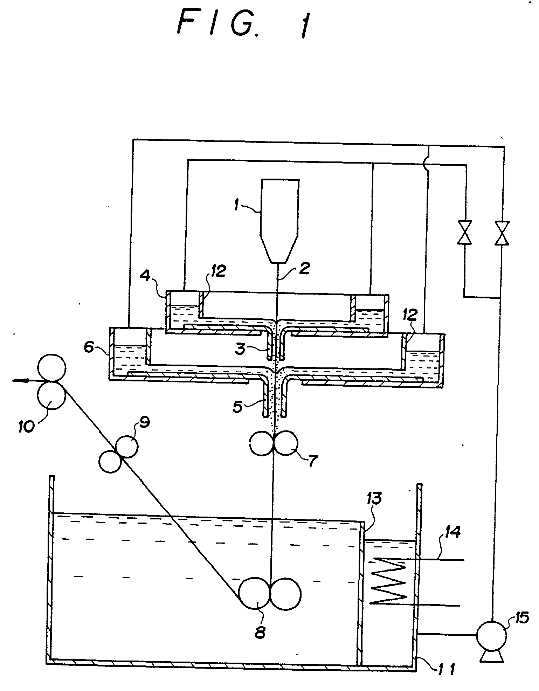

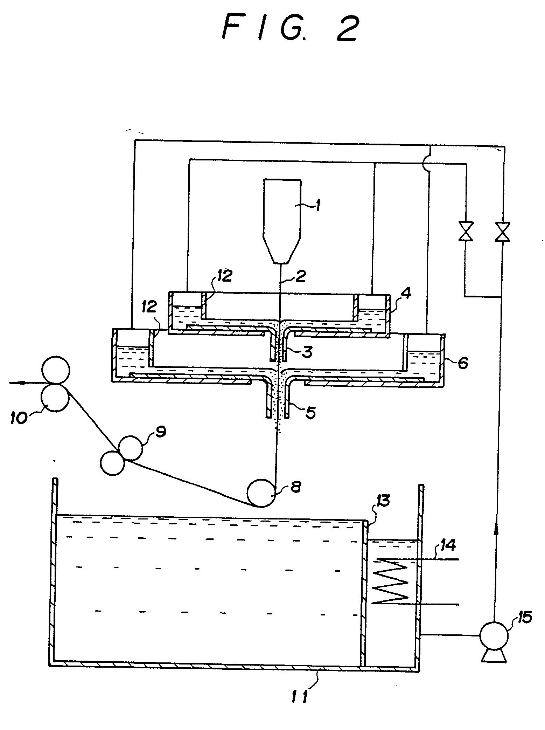

The thermoplastic resin sheet introduced and cooled in the multi-stage slit in which the cooling water flows is then withdrawn through guide rolls 7 and 8 and further draining roll 9 by take-off roll 10 as illustrated in Fig. 1, or is withdrawn through guide roll 8 and draining roll 9 by take-off roll 10 without passing through the water bath as illustrated in Fig. 2. The guide roll 7 is used to ensure that the thermoplastic resin sheet is always positioned in the central part of the slit and further to ensure the accuracy of the sheet or film thickness by running the film-shaped thermoplastic resin at a fixed speed.

In the drawings, the reference numeral 11 indicates a lower water bath; 12, a water level-controlling plate; 13, an overflow plate; 14, a cooler; and 15, a pump.

Although the present invention has been explained above referring to a water bath system in which the thermoplastic resin sheet is cooled, it can also be performed by a slit jet system with the same results as above.

When curls are observed in the sheet or film obtained by the method of the invention, they can be completely removed by heating the sheet or film at a temperature of from 60°C to the melting point of the thermoplastic resin, for example, at a temperature of from 80 to 130°C in the case of propylene-based resins. This heat treatment is performed for from 1 second to 60 minutes and preferably from 5 seconds to 10 minutes. Although this heat treatment can be performed by any conventional technique, it is preferred to conduct it by the roll annealing process using heating rolls.

In accordance with the method of the invention, when the nucleating agent is added, sheet or film of high rigidity can be produced without application of the annealing procedure. However, curling is liable to occur in sheets having relatively high thicknesses. In this case it is necessary to apply the annealing procedure to remove such curls. On the other hand, curling does not occur when any nucleating agent is not added. This annealing, however, increases the rigidity of sheet or film by 20—50% and further increases the transparency (haze) by about 50%. This increase of the transparency is an unexpected and astonishing fact.

In accordance with the method of the invention, even when crystalline thermoplastic resins are used as the starting material, there can be produced sheet or film which is not oriented and is superior in transparency and surface lustre. Furthermore this sheet or film is freed of unevenness in thickness, wrinkles and curls, and thus is superior in uniformity.

The method of the invention has advantages in that sheet or film can be prepared by high-speed moulding at at least 10 metres per minute, and the cooling cost is low.

The sheet or film produced by the method of the invention has superior properties as described above and therefore is suitable for use in wrapping of foods, medicines, etc. Further, the sheet or film can be used as a raw material for solid moulding such as pressure moulding, roll calender moulding, and extension moulding.

The invention is described in greater detail with reference to the following Examples.

## Examples 1 to 5

Polypropylene (density: 0.91 g/cc; melt index: 2.0 g/10 minutes) was extruded at a resin temperature of 260°C by means of a T-die extruder (diameter: 60 mm; L/D = 28; die width: 550 mm; die lip opening: 1 mm). The molten resin sheet thus extruded was introduced in the first slit (width: 2 mm; length: 45 mm) in which cooling water (temperature: 16°C) was flowing and, thereafter, in the second slit (width: 4 mm; length: 10 mm) provided below the first slit with a distance of 50 mm therebetween, in which cooling water (temperature: 20°C) was flowing., The cooled resin sheet was then withdrawn by take-off rolls as illustrated in Fig. 2 (excluding Examples 4 and 5), whereby a polypropylene sheet was formed. In Examples 4 and 5, the production of sheet was performed under combined conditions of those of Example 2 and those shown in the Notes to Table 1. The operation conditions and the physical properties of the sheet prepared are shown in Table 1.

TABLE 1

| | Example | | | | |
|---|---|---|---|---|---|
| | 1 | 2 | 3 | 4*1 | 5*2 |
| Moulding Speed (m/min) | 15 | 20 | 25 | 20 | 20 |
| Sheet Thickness (mm) | 0.2 | 0.2 | 0.2 | 0.2 | 0.2 |
| Sheet Appearance | | | | | |
| Boiling Dots | none | none | none | none | none |
| Haze Dots | none | none | none | none | none |
| Curl | none | none | none | none | none |
| Sheet Haze | | | | | |
| Total Haze (%) | 10 | 10 | 13 | 10 | 10 |
| Internal Haze (%) | 3 | 4 | 6 | 4 | 5 |
| External Haze (%) | 7 | 6 | 7 | 6 | 5 |

Note: *1 Pressure rolls are provided after the second slit.
  *2 Pressure rolls are provided after the second slit, and cooling is performed by means of the lower water bath (20°C).

Examples 6 to 10
Polypropylene (density: 0.91 g/cc; melt index: 2.0 g/10 minutes) was extruded at a resin temperature of 250°C by means of a T-die extruder (diameter: 60 mm; L/D = 28; die width: 550 mm; die lip opening: 1.5 mm). The molten resin sheet thus extruded was introduced into the first slit (width: 2 mm; length 45 mm) in which cooling water (16°C) was flowing, and then into the second slit (width: 4 mm; length: 10 mm) provided between the first slit with a distance of 50 mm therebetween, in which cooling water (20°C) was flowing. The cooled sheet was withdrawn by take-off rolls as illustrated in Fig. 2, whereby a polypropylene sheet was prepared. In Examples 7 to 10, the sheet-formation-was performed under combined conditions of Example 6 and those shown in the Notes to Table 2. The operation conditions and the physical properties of the sheet prepared are shown in Table 2.

Example 11
Propylene-ethylene random copolymer (density, 0.90 g/cc; melt index, 7.0 g/10 minutes; ethylene content, 4% by weight) was extruded at a resin temperature of 220°C. The T-die and cooling conditions were identical to those of Example 9. The properties of the sheet prepared are shown in Table 2.

5

TABLE 2

| | Example | | | | | |
|---|---|---|---|---|---|---|
| | 6 | 7*5 | 8*6 | 9*7 | 10*8 | 11*7 |
| Moulding Speed (m/min) | 20 | 20 | 20 | 20 | 20 | 20 |
| Sheet Thickness (mm) | 0.25 | 0.25 | 0.25 | 0.25 | 0.25 | 0.25 |
| Sheet Appearance | | | | | | |
| Boiling Dots | none | none | none | none | none | none |
| Haze Dots | *1 | none | none | none | none | none |
| Curl | *2 | *3 | none | none | none | none |
| Fine Surface Irregularity | *4 | *4 | none | *4 | none | *4 |
| Sheet Haze | | | | | | |
| Total Haze (%) | 21 | 11 | 22 | 14 | 11 | 8 |
| Internal Haze (%) | 10 | 5 | 16 | 4 | 5 | 4 |
| External Haze (%) | 11 | 6 | 6 | 10 | 6 | 4 |
| Modulus of Elasticity | | | | | | |
| MD (kg/cm$^2$) | 14000 | 23000 | 14000 | 18000 | 24000 | 12000 |
| TD (kg/cm$^2$) | 13000 | 25000 | 14000 | 18000 | 25000 | 12000 |

Note: *1 Some haze dots are formed.
*2 Curling occurs slightly.
*3 Curling Occurs.
*4 Irregularity is slightly formed.
*5 0.2% by weight of dibenzylidene sorbitol is added to the polypropylene of Example 6.
*6 0.001% by weight of carboxymethyl cellulose is added to the cooling water of Example 6.
*7 In-line roll annealing (roll temperature: 120°C) is applied in Example 6.
*8 Example 7+8+9.

## Claims

1. A method of producing a thermoplastic sheet or film, the method comprising extruding a molten thermoplastic resin sheet through a T-die in which quenching water is fed to a multi-stage slit in which water flows in the same direction as the sheet, the water level in the first slit of the multistage slit being maintained at as low a level as possible and substantially at right angles to the first slit, so that the water flows in a laminar state.

2. A method according to claim 1 in which the water level at the first slit is 7 mm or less.

3. A method according to claim 1 or claim 2 in which the multistage slit has from 2 to 5 slits.

4. A method according to any preceding claim in which the thermoplastic resin contains a nucleating agent.

5. A method according to any preceding claim in which the cooling water is a viscous fluid containing a thickening agent.

6. A method according to any preceding claim in which the temeprature of the cooling water is from −10 to +50°C.

7. A method according to any preceding claim in which the sheet or film is subjected to roll annealing at a temperature of from 80 to 130°C before winding it.

## Patentansprüche

1. Verfahren zur Herstellung einer thermoplastischen Folie bzw. eines Filmes, bei dem eine geschmolzene thermoplastische Kunstharzplatte durch eine T-Düse extrudiert wird, wobei Kühlwasser einem Mehrstufenschlitz zugeführt wird, in dem das Wasser in der gleichen Richtung wie die Platte strömt, und der Wasserstand im ersten Schlitz des Mehrstufenschlitzes so niedrig wie möglich und im wesentlichen rechwinklig zum ersten Schlitz verlaufend gehalten wird, wodurch eine laminare Strömung des Wassers ensteht.

2. Verfahren gemäß Anspruch 1, beim dem der Wasserstand im ersten Schlitz 7 mm oder weniger beträgt.

3. Verfahren gemäß Anspruch 2, beim dem der Mehrstufenschlitz 2 bis 5 Schlitze aufweist.

4. Verfahren gemäß einem der vorhergehenden Ansprüche, beim dem das thermoplastische Kunstharz ein Nukleierungsmittel enthält.

5. Verfahren gemäß einem der vorhergehenden Ansprüche, beim dem das Kühlwasser eine zähflüssige Flüssigkeit ist, die ein Eindikkungsmittel enthält.

6. Verfahren gemäß einem der vorhergehenden Ansprüche, beim dem die Temperatur des Kühlwassers zwischen −10 und +50°C liegt.

7. Verfahren gemäß einem der vorhergehenden Ansprüche, beim dem die Folie bzw. der Film vor dem Aufwickeln bei einer Temperatur von 80 bis 130°C mittels einer Walze geglüht wird.

**Revendications**

1. Une méthode pour produire une feuille ou pelicule thermoplastique, la méthode qui comporte le refoulement d'une feuille de résine thermoplastique en fusion par une matrice-T dans laquelle de l'eau de refroidissement est alimentée à une fente multi-phases en laquelle l'eau coule dans le même sens que la feuille, le niveau d'eau dans la première fente de la fente multi-phases étant maintenu à un niveau aussi bas que possible et substantiellement à angle droit à la première fente, ainsi que l'eau coule d'un état laminaire.

2. Une méthode suivant la revendication 1 dans laquelle le niveau d'eau à la première fente est à 7 mm ou moins.

3. Une méthode suivant la revendication 1 ou la revendication 2 dans laquelle la fente multi-phases a de 2 à 5 fentes.

4. Une méthode suivant toute revendication précédente dans laquelle la résine thermoplastique contient un agent nucléant.

5. Une méthode suivant toute revendication précédente dans laquelle l'eau de refroidissement est un fluide visqueux qui contient un agent épaississant.

6. Une méthode suivant toute revendication précédente dans laquelle la température de l'eau de refroidissement est de −10 à +50°C.

7. Une méthode suivant toute revendication précédente dans laquelle la feuille ou pellicule est soumise au recuit lamineux à une température de 80 à 130°C avant de l'enrouler.

# F I G. 1

# F I G. 2